# EUROPÄISCHE PATENTSCHRIFT

(11) **EP 2 525 073 B1**
(45) Veröffentlichungstag und Bekanntmachung des Hinweises auf die Patenterteilung: **12.07.2017**
(21) Anmeldenummer: 11166157.5
(22) Anmeldetag: 16.05.2011
(51) Int. Cl.: F02M 31/13, F02M 35/112, F02M 35/10, F02N 19/00

(54) **Brennkraftmaschine mit Ansauglufterwärmung und Verfahren zum Betreiben einer derartigen Brennkraftmaschine**
Internal combustion engine equipped with intake air heating and method to operate such an engine
Moteur à combustion interne doté d'un chauffage d'air d'aspiration et procédé de fonctionnement d'un tel moteur à combustion interne

(43) Veröffentlichungstag der Anmeldung: 21.11.2012
(73) Patentinhaber: Ford Global Technologies, LLC, Dearborn, MI 48126 (US)
(72) Erfinder: Vigild, Christian Winge, 52457, Aldenhoven (DE); Kuske, Andreas, 6243 CM, Geulle (NL); Roettger, Daniel, 4731, Eynatten (BE); Hemink, Wilbert, 6374 EH, Landgraaf (NL)
(74) Vertreter: Illing, Rolf

(56) Entgegenhaltungen:
- DE-A1- 10 332 936
- FR-A1- 2 876 419
- JP-A- 5 039 757
- JP-A- 61 055 356
- US-A- 4 685 437
- US-A1- 2006 150 958
- US-A1- 2008 047 944

## Beschreibung

Die Erfindung betrifft eine Brennkraftmaschine mit mindestens einem Zylinderkopf und mindestens zwei Zylindern, bei der jeder Zylinder mindestens eine Einlaßöffnung zum Zuführen von Verbrennungsluft in den Zylinder aufweist, wobei
- zu jeder Einlaßöffnung eine Ansaugleitung führt,
- die Ansaugleitungen von mindestens zwei Zylindern unter Ausbildung eines Verteilerknotenpunktes zu einer Gesamtansaugleitung zusammenführen, und
- in der Gesamtansaugleitung eine Heizvorrichtung angeordnet ist, die mindestens ein bandförmiges Heizelement aufweist, welches mit einer ersten schmalen Seite des Querschnitts der angesaugten Verbrennungsluftströmung zugewandt ist.

Des Weiteren betrifft die Erfindung ein Verfahren zum Betreiben einer derartigen Brennkraftmaschine.

Im Rahmen der vorliegenden Erfindung umfaßt der Begriff Brennkraftmaschine insbesondere Ottomotoren, aber auch Dieselmotoren und Hybrid-Brennkraftmaschinen.

Brennkraftmaschinen verfügen über einen Zylinderblock und mindestens einen Zylinderkopf, die zur Ausbildung der Zylinder miteinander verbunden werden. Um den Ladungswechsel zu steuern, benötigt eine Brennkraftmaschine Steuerorgane - in der Regel in Gestalt von Ventilen - und Betätigungseinrichtungen zur Betätigung dieser Steuerorgane. Der für die Bewegung der Ventile erforderliche Ventilbetätigungsmechanismus einschließlich der Ventile selbst wird als Ventiltrieb bezeichnet. Häufig dient der Zylinderkopf zur Aufnahme des Ventiltriebs.

Im Rahmen des Ladungswechsels erfolgt das Ausschieben der Verbrennungsgase über die Auslaßöffnungen der Zylinder und das Füllen der Brennräume, d. h. das Ansaugen der Verbrennungsluft über die Einlaßöffnungen. Ist die Brennkraftmaschine mit einer Abgasrückführung ausgestattet, kann die Verbrennungsluft neben der aus der Umgebung angesaugten Frischluft auch Abgas enthalten. Wird der Kraftstoff nicht direkt in die Zylinder eingespritzt, sondern beispielsweise stromaufwärts der Zylinder in den Ansaugtrakt eingebracht, wird nicht nur die Verbrennungsluft, sondern vielmehr auch der Kraftstoff den Zylindern via Einlaßöffnungen zugeführt.

Es ist die Aufgabe des Ventiltriebes die Einlaß- und Auslaßöffnungen rechtzeitig freizugeben bzw. zu schließen, wobei eine schnelle Freigabe möglichst großer Strömungsquerschnitte angestrebt wird, um die Drosselverluste in den ein- bzw. ausströmenden Gasströmungen gering zu halten und eine möglichst gute Füllung des Brennraumes mit Frischgemisch bzw. ein effektives, d. h. vollständiges Abführen der Abgase zu gewährleisten.

Die Ansaugleitungen, die zu den Einlaßöffnungen führen, sind nach dem Stand der Technik zumindest teilweise im Zylinderkopf integriert und werden in der Regel unter Ausbildung mindestens eines sogenannten Einlaßkrümmers zusammengeführt; häufig zu einer einzelnen Gesamtansaugleitung.

An den Einlaßbereich einer Brennkraftmaschine werden unterschiedliche Anforderungen gestellt. So wird unter anderem eine Anordnung und Ausbildung der Ansaugleitungen angestrebt, die zu einem möglichst geringen Druckverlust in der angesaugten Verbrennungsluft führt, um eine gute Füllung der Zylinder mit Frischgemisch zu gewährleisten.

Die Geometrie einer Ansaugleitung hat zudem Einfluß auf die Ladungsbewegung im Zylinder und damit auf die Gemischbildung, insbesondere bei direkteinspritzenden Brennkraftmaschinen. Häufig werden die Ansaugleitungen daher im Hinblick auf die Erzeugung eines sogenannten Tumbles oder einer Drallströmung ausgebildet, die die Gemischbildung beschleunigen und unterstützen, wobei ein Tumble ein Luftwirbel um eine gedachte Achse ist, die parallel zur Längsachse der Kurbelwelle verläuft, und ein Drall einen Luftwirbel bezeichnet, dessen Achse parallel zur Kolben- bzw. Zylinderlängsachse verläuft.

Während des Ladungswechsels variiert der Druck entlang des Strömungsweges im Ansaugkanal. Derartige lokale Druckschwankungen breiten sich in gasförmigen Medien als Wellen aus. Um diese dynamischen Wellenvorgänge für die Optimierung des Ladungswechsels nutzbar zu machen, kann beispielsweise der Einlaßbereich in der Art ausgelegt werden, dass gegen Ende des Ansaugtaktes an den Einlaßöffnungen eine Überdruckwelle ankommt, die zu einer Verdichtung und damit zu einem gewissen Nachladeeffekt führt. Zielführend sind dabei in der Länge variable Ansaugleitungen.

In die Ansaugleitung bzw. Gesamtansaugleitung kann eine Vielzahl von zusätzlichen Leitungen einmünden, beispielsweise die Rückführleitung einer Abgasrückführung oder die Bypaßleitung eines Ladeluftkühlers bzw. eines Verdichters.

Darüber hinaus können Brennkraftmaschinen mit einer Heizvorrichtung ausgestattet werden, die im Einlaßbereich, d. h. Ansaugbereich, angeordnet ist und der Erwärmung der Ansaugluft dient.

Das Erwärmen der Ansaugluft kann unterschiedlichen Zielsetzungen dienen, beispielsweise der Verkürzung der Warmlaufphase nach einem Kaltstart, wie in der DE 198 54 077 A1 beschrieben.

Die deutsche Offenlegungsschrift DE 10 2006 030 464 A1 nutzt das Anwärmen der Ansaugluft bei großvolumigen Dieselmotoren auch außerhalb der Start- und Warmlaufphase, um bei der Verwendung von Kraftstoff mit niedriger Cetanzahl im Leerlauf Zündaussetzer zu vermeiden. Darüber hinaus wird das Heizelement während der Regeneration des Partikelfilters zugeschaltet, ebenso wenn das Motordrehmoment und die Motordrehzahl einen vorgegebenen Mindestwert unterschreiten.

Eine für den Einsatz bei Brennkraftmaschinen geeignete Heizvorrichtung wird beispielsweise in der deutschen Offenlegungsschrift DE 102 14 166 A1, in der europäischen Patentschrift EP 0 793 399 B1 und in der US 2008/0047944 A1 beschrieben.

Diese aus dem Stand der Technik bekannten Heizvorrichtungen umfassen bandförmige Heizelemente, die elektrisch beheizbar sind und einen in der Grundform rechteckigen Querschnitt aufweisen. Die bandförmigen Heizelemente werden in der Weise im Einlaßbereich angeordnet, dass ihr rechteckförmiger Querschnitt für die angesaugte Verbrennungsluft einen möglichst kleinen Widerstand darstellt. Mit einer ersten schmalen Seite des Querschnitts sind die bandförmigen Heizelemente der angesaugten Verbrennungsluftströmung zugewandt, wohingegen die langen Seiten des rechteckförmigen Querschnitts sich in Strömungsrichtung erstrecken, so dass die angesaugte Verbrennungsluft tangential über die größeren Längsseiten strömt. Eine derartige Ausrichtung des Querschnitts ist strömungstechnisch günstig, aber auch im Hinblick auf den Wärmeübergang infolge Konvektion vorteilhaft.

Eine Brennkraftmaschine, bei der in der Gesamtansaugleitung mindestens eine Heizvorrichtung angeordnet ist, die mindestens ein bandförmiges Heizelement aufweist, welches mit einer ersten schmalen Seite des Querschnitts der angesaugten Verbrennungsluftströmung zugewandt ist, ist auch Gegenstand der vorliegenden Erfindung.

Die Anordnung der Heizvorrichtung im Ansaugbereich einer Brennkraftmaschine wird gemäß der DE 198 54 077 A1 nur dahingehend konkretisiert, dass die Heizvorrichtung grundsätzlich auch stromabwärts eines im Ansaugbereich vorgesehenen Ladeluftkühlers angeordnet werden kann. Im Weiteren behandelt der vorstehend genannte Stand der Technik den Aufbau der Heizvorrichtung als solchen, insbesondere den als Aufnahme bzw. Rahmen dienenden Flansch, sowie die Ausbildung der bandförmigen Heizelemente und die hierzu verwendeten Werkstoffe bzw. Werkstoffmischungen.

Vor dem Hintergrund des oben Gesagten ist es eine Aufgabe der vorliegenden Erfindung, eine Brennkraftmaschine gemäß dem Oberbegriff des Anspruchs 1 bereitzustellen, die hinsichtlich der Anordnung der Heizvorrichtung im Ansaugbereich optimiert ist.

Eine weitere Teilaufgabe der vorliegenden Erfindung ist es, ein Verfahren zum Betreiben einer derartigen Brennkraftmaschine aufzuzeigen.

Gelöst wird die erste Teilaufgabe durch eine Brennkraftmaschine mit mindestens einem Zylinderkopf und mindestens zwei Zylindern, bei der jeder Zylinder mindestens eine Einlaßöffnung zum Zuführen von Verbrennungsluft in den Zylinder aufweist, wobei
- zu jeder Einlaßöffnung eine Ansaugleitung führt,
- die Ansaugleitungen von mindestens zwei Zylindern unter Ausbildung eines Verteilerknotenpunktes zu einer Gesamtansaugleitung zusammenführen, und
- in der Gesamtansaugleitung eine Heizvorrichtung angeordnet ist, die mindestens ein bandförmiges Heizelement aufweist, welches mit einer ersten schmalen Seite des Querschnitts der angesaugten Verbrennungsluftströmung zugewandt ist,
und die dadurch gekennzeichnet ist, dass
- die Heizvorrichtung benachbart zu dem Verteilerknotenpunkt angeordnet ist, in dem die Ansaugleitungen zu der Gesamtansaugleitung zusammenführen, wobei der Abstand Δ zwischen der Heizvorrichtung und dem Verteilerknotenpunkt kleiner ist als der Durchmesser *d* eines Zylinders mit Δ < *d.*

Bei der erfindungsgemäßen Brennkraftmaschine ist die Heizvorrichtung möglichst nahe an den Einlaßöffnungen der Zylinder angeordnet, nämlich benachbart zu dem Verteilerknotenpunkt eines Einlaßkrümmers, an dem die einzelnen Ansaugleitungen zu den mindestens zwei Zylindern abzweigen. Diese Anordnung unterstützt die Heizvorrichtung in ihrer eigentlichen Funktion, nämlich den Zylindern vorerwärmte Verbrennungsluft zur Verfügung zu stellen, d. h. zu zuführen.

Durch die Anordnung der Heizvorrichtung nahe am Verteilerknotenpunkt wird der Weg der vorerwärmten Verbrennungsluft zu den Zylindern weitestgehend verkürzt. Damit wird der vorerwärmten Verbrennungsluft möglichst wenig Wegstrecke und Zeit zur Abkühlung eingeräumt. Die thermische Trägheit des Teilstücks der Ansaugleitungen zwischen der Einlaßöffnung am Zylinder und der Heizvorrichtung wird minimiert und zwar durch Reduzierung der Masse und der Länge dieses Teilstückes.

Diese Maßnahme stellt sicher, dass die Verbrennungsluft bei Eintritt in die Zylinder eine möglichst hohe Temperatur aufweist, wodurch sich insbesondere die Warmlaufphase nach einem Kaltstart der Brennkraftmaschine deutlich verkürzt. Vorteile bietet dies insbesondere hinsichtlich der Schadstoffemissionen.

Zu berücksichtigen ist in diesem Zusammenhang, dass eine zügige Aufheizung der Brennkraftmaschine mittels vorerwärmter Ansaugluft auch zu einer schnelleren, vorliegend indirekten Erwärmung des Motoröls führt. Die damit einhergehende Abnahme der Viskosität bedingt eine Verringerung der Reibung bzw. Reibleistung, insbesondere in den mit Öl versorgten Lagern. Ein Effekt der sich vorteilhaft auf den Kraftstoffverbrauch auswirkt.

Vorteilhaft sind Ausführungsformen der Brennkraftmaschine, bei denen die Ansaugleitungen von mindestens zwei Zylindern unter Ausbildung eines Einlaßkrümmers innerhalb des mindestens einen Zylinderkopfes zu einer Gesamtansaugleitung zusammenführen. Die Integration des Einlaßkrümmers in den Zylinderkopf verkürzt die vorliegend relevante Wegstrecke der Ansaugleitungen weiter und damit die thermische Trägheit des Teilstücks der Ansaugleitungen zwischen dem Zylindereinlaß und der Heizvorrichtung. Diese Maßnahme gestattet darüber hinaus ein dichtes Packaging der Antriebseinheit und verringert die Anzahl an Bauteilen und damit die Montage- und Bereitstellungskosten.

Nichtsdestotrotz können Ausführungsformen der Brennkraftmaschine vorteilhaft sein, bei denen die Ansaugleitungen von mindestens zwei Zylindern außerhalb des mindestens einen Zylinderkopfes zu einer Gesamtansaugleitung zusammenführen und einen externen Einlaßkrümmer ausbilden.

Die erfindungsgemäße Anordnung der Heizvorrichtung nahe des Verteilerknotenpunktes löst die erste der Erfindung zugrunde liegende Aufgabe, nämlich eine Brennkraftmaschine bereitzustellen, die hinsichtlich der Anordnung der Heizvorrichtung im Ansaugbereich optimiert ist.

Im Gegensatz zu den aus dem Stand der Technik bekannten Konzepten ermöglicht die erfindungsgemäße nahe Anordnung der Heizvorrichtung an den Zylindern, die bandförmigen Heizelemente derart auszurichten bzw. auszubilden, dass diese eine gleichmäßige Verteilung der angesaugten Verbrennungsluft auf die einzelnen Zylinder unterstützen. Die Heizvorrichtung dient dabei auch als Leitvorrichtung für die Verbrennungsluft.

Vorteilhaft sind Ausführungsformen der Brennkraftmaschine, bei denen die erste schmale Seite des Querschnitts des mindestens einen bandförmigen Heizelementes im Wesentlichen senkrecht zu der angesaugten Verbrennungsluftströmung steht.

Eine erfindungsgemäße Brennkraftmaschine kann auch zwei Zylinderköpfe aufweisen, beispielsweise, wenn mehrere Zylinder auf zwei Zylinderbänke verteilt angeordnet sind.

Erfindungsgemäß müssen nicht die Ansaugleitungen sämtlicher Zylinder eines Zylinderkopfes zu einer Gesamtansaugleitung zusammenführen, sondern nur die Ansaugleitungen von mindestens zwei Zylindern.

Vorteilhaft sind aber auch Ausführungsformen, bei denen die Ansaugleitungen sämtlicher Zylinder des mindestens einen Zylinderkopfes zu einer Gesamtansaugleitung zusammenführen.

Die Ansaugleitungen können auch unter Ausbildung von zwei Verteilerknotenpunkten zu zwei Gesamtansaugleitungen zusammenführen, wenn mehr als zwei Zylinder und/oder mehr als eine Einlaßöffnung je Zylinder vorgesehen sind. Gegebenenfalls sind dann zwei Heizvorrichtungen vorzusehen.

Weitere vorteilhafte Ausführungsformen der Brennkraftmaschine werden im Zusammenhang mit den Unteransprüchen erörtert.

Vorteilhaft sind Ausführungsformen der Brennkraftmaschine, bei denen der Abstand Δ zwischen der Heizvorrichtung und dem Verteilerknotenpunkt kleiner ist als der halbe Durchmesser *d* eines Zylinders mit Δ < 0.5*d*.

Vorteilhaft sind insbesondere Ausführungsformen der Brennkraftmaschine, bei denen der Abstand Δ zwischen der Heizvorrichtung und dem Verteilerknotenpunkt kleiner ist als ein Viertel des Durchmesser *d* eines Zylinders mit Δ < 0*.*25*d.*

Die zusätzliche Verkürzung des Abstandes Δ zwischen der Heizvorrichtung und dem Verteilerknotenpunkt gemäß den beiden vorstehend genannten Ausführungsformen trägt dazu bei, die Wegstrecke zu den Zylindern für die vorerwärmte Verbrennungsluft weiter zu verkürzen, d. h. die thermische Trägheit des Teilstücks der Ansaugleitungen zwischen dem Zylindereinlaß und der Heizvorrichtung zu vermindern.

Als Abstand Δ zwischen der Heizvorrichtung und dem Verteilerknotenpunkt wird im Rahmen der vorliegenden Erfindung die Wegstrecke zwischen dem Austritt aus der Heizvorrichtung und der Mitte des Verteilerknotenpunktes, in dem sich die mittleren Stromfäden der Ansaugleitungen treffen, bezeichnet.

Bei Brennkraftmaschinen, bei denen die mindestens zwei Zylinder entlang der Längsachse des mindestens einen Zylinderkopfes in Reihe angeordnet sind, sind Ausführungsformen vorteilhaft, die dadurch gekennzeichnet sind, dass das mindestens eine bandförmige Heizelement im Wesentlichen horizontal entlang einer Parallelen zur Längsachse, vorzugsweise parallel zur Längsachse, des mindestens einen Zylinderkopfes ausgerichtet ist.

Untersuchungen haben gezeigt, dass eine horizontale Ausrichtung der Heizelemente hinsichtlich der Verteilung der angesaugten Verbrennungsluft auf die einzelnen Zylinder vorteilhaft ist und auch Vorteile hinsichtlich des Füllungsgrades bietet.

Bei Brennkraftmaschinen der in Rede stehenden Art, bei der die mindestens zwei Zylinder entlang der Längsachse des mindestens einen Zylinderkopfes in Reihe angeordnet sind, sind insbesondere Ausführungsformen vorteilhaft, die dadurch gekennzeichnet sind, dass das mindestens eine bandförmige Heizelement im Wesentlichen vertikal quer, vorzugsweise senkrecht, zu einer Parallelen der Längsachse des mindestens einen Zylinderkopfes ausgerichtet ist.

Eine derartige Ausrichtung der bandförmigen Heizelemente ist besonders geeignet, um die Heizelemente als Leiteinrichtung für die erwärmte Luftströmung auszubilden bzw. zu nutzen. Mit einer solchen Leiteinrichtung kann die angesaugte Verbrennungsluft in vorteilhafter Weise geführt und gelenkt werden, in der Art, dass eine gleichmäßige Verteilung der Luft auf die einzelnen Zylinder erfolgt. Eine gleichmäßige Füllung der Zylinder mit Frischgemisch wird angestrebt. Dadurch verbessert sich das Betriebsverhalten der Brennkraftmaschine, insbesondere im Hinblick auf die Schadstoffemissionen, den Kraftstoffverbrauch und die verfügbare Leistung.

Vorteilhaft sind Ausführungsformen der Brennkraftmaschine, bei denen sich das mindestens eine bandförmige Heizelement zu einer ersten schmalen Stirnseite hin, die der angesaugten Verbrennungsluftströmung zugewandt ist, verjüngt.

Es ergeben sich strömungstechnische Vorteile. Dadurch, dass sich die Heizelemente entgegengesetzt zur Strömungsrichtung verjüngen, werden beim Auftreffen der Luftströmung auf die Heizvorrichtung weniger Turbulenzen erzeugt. Zudem verengt sich der Strömungsquerschnitt der Gesamtansaugleitung nicht sprunghaft, sondern kontinuierlich, wodurch die Einschnürung der Luftteilströmungen nicht schlagartig erfolgt. Dabei schneiden die Heizelemente messerartig in die sie anströmende Luft ein. Der Widerstand, den die Heizvorrichtung der Luftströmung entgegensetzt, wird durch die beschriebene Ausbildung des mindestens einen bandförmigen Heizelementes verkleinert, wodurch auch der sich über die Heizvorrichtung einstellende Druckverlust verringert wird. Mit der in Rede stehenden Ausführungsform wird einer Verschlechterung des Füllungsgrades infolge der Heizvorrichtung entgegen gewirkt.

Vorteilhaft sind auch aus den vorstehend genannten Gründen Ausführungsformen der Brennkraftmaschine, bei denen sich eine erste schmale Stirnseite des mindestens einen bandförmigen Heizelementes, die der angesaugten Verbrennungsluftströmung zugewandt ist, verjüngt.

In diesem Zusammenhang muß zudem berücksichtigt werden, dass moderne Brennkraftmaschinen zunehmend mit einer Abgasrückführung ausgestattet werden, mit der Abgas in den Ansaugbereich zurückgeführt wird. Häufig wird das rückzuführende Abgas gekühlt, bevor es in den Ansaugbereich eingeleitet wird. Dies kann im Hinblick auf die Heizvorrichtung problematisch sein, wenn das Abgas stromaufwärts der Heizvorrichtung in den Ansaugbereich eingeleitet wird.

Unter Umständen wird dem Abgasmassenstrom bei der Kühlung so viel Wärme entzogen, dass einzelne Abgasbestandteile aus dem heißen Abgas auskondensieren und sich in der Heizvorrichtung ablagern. Die auskondensierten Abgasbestandteile können eine klebrige, mit zunehmender Betriebsdauer anwachsende Schicht auf der Oberfläche der Heizelemente aufbauen, an der schließlich auch die festen Bestandteile des Abgasmassenstromes bei Berührung hängen bleiben, insbesondere im Abgas befindliche Rußpartikel. Die Ablagerungen führen zu einem verengten Strömungsquerschnitt, gegebenenfalls zu einem vollständigen Verschluß der Gesamtansaugleitung und verschlechtern den Wärmeübergang vom Heizelement auf die angesaugte Luft. Eine Verengung des Strömungsquerschnittes des Ansaugkanals wäre zudem mit einem Druckverlust in der Ansaugströmung und einer Verschlechterung des Füllungsgrades verbunden.

Eine sich verjüngende erste schmale Stirnseite des mindestens einen bandförmigen Heizelementes wirkt derartigen Ablagerungen entgegen. Querschnittsverengungen infolge von Ablagerungen oder gar Kanalblockaden, hervorgerufen durch auskondensierte Abgasbestandteile, sind nicht zu befürchten bzw. wird entgegen gewirkt.

Vorteilhaft sind Ausführungsformen der Brennkraftmaschine, bei denen der Querschnitt des mindestens einen bandförmigen Heizelementes bogenförmig ausgebildet ist, so dass das mindestens eine bandförmige Heizelement eine schaufelförmige Gestalt aufweist.

Eine bogenförmige Ausbildung des bandförmigen Heizelementes ist vorteilhaft hinsichtlich einer Verwendung der Heizvorrichtung als Leiteinrichtung. Zu berücksichtigen ist dabei, dass der Verteilerknotenpunkt in Bezug auf die mindestens zwei Zylinder in der Regel mittig angeordnet ist, die räumliche Ausdehnung des Knotenpunktes begrenzt ist und die vorerwärmte Luft daher auf dem Weg zu den Zylindern nahezu bei jeder Ausführungsform der Brennkraftmaschine mehr oder weniger stark umzulenken ist.

Die schaufelförmige Gestalt des mindestens einen bandförmigen Heizelementes gestattet eine verlustfreie bzw. druckverlustarme Umlenkung der angesaugten Verbrennungsluft und eine gleichmäßige Verteilung der Luft auf die einzelnen Zylinder.

Vorteilhaft sind Ausführungsformen der Brennkraftmaschine, bei denen die Heizvorrichtung mindestens zwei bandförmige Heizelemente aufweist. Mit der Anzahl der Heizelemente nimmt auch die wärmeübertragende Fläche zu und damit die Wärmemenge, die auf die angesaugte Verbrennungsluft übertragbar ist. Der Anzahl an Heizelementen kommt hinsichtlich des Wärmeübergangs eine nicht zu vernachlässigende Bedeutung zu, da die Strömungsgeschwindigkeiten in der Gesamtansaugleitung hoch sind und die Temperatur der Heizelemente und damit die Temperaturdifferenz zwischen den Heizelementen und der Luft nicht beliebig erhöht werden kann, um den Wärmeübergang zu steigern.

Die Ausbildung der Heizvorrichtung als Leiteinrichtung wird ebenfalls erleichtert, wenn mehrere Heizelemente vorgesehen werden und zur Beeinflussung der Strömung verwendet werden können.

Vorteilhaft sind dabei Ausführungsformen der Brennkraftmaschine, bei denen die mindestens zwei bandförmigen Heizelemente beabstandet zueinander angeordnet sind. Erst auf diese Weise lassen sich die Vorteile, die mehrere Heizelemente bieten, nutzen.

Bei Brennkraftmaschinen mit mindestens zwei bandförmigen Heizelementen, die im Wesentlichen vertikal quer zu einer Parallelen der Längsachse des mindestens einen Zylinderkopfes ausgerichtet sind, haben sich Ausführungsformen als vorteilhaft erwiesen, die dadurch gekennzeichnet sind, dass mindestens zwei bandförmige Heizelemente in einem spitzen Winkel zueinander angestellt sind. Eine derartige Anordnung der Heizelemente fächert den vorerwärmten Luftstrom auf, wodurch dieser auf die Zylinder verteilt wird.

Bei der vorstehend genannten Art von Brennkraftmaschine, bei der die mindestens zwei bandförmigen Heizelemente im Wesentlichen vertikal ausgerichtet sind, sind des Weiteren Ausführungsformen vorteilhaft, bei denen mindestens zwei bandförmige Heizelemente eine schaufelförmige Gestalt aufweisen, wobei die konkave Seite nach außen gewandt ist.

Nach außen gewandt bedeutet in diesem Zusammenhang, dass die konkave, d. h. die nach innen gewölbte Seite der Wandung der Gesamtansaugleitung bzw. dem die Heizelemente aufnehmenden Flansch der Heizvorrichtung zugewandt und vom mittleren Stromfaden der Verbrennungsluftströmung abgewandt ist. Dabei öffnen sich die mindestens zwei Heizelemente vorzugsweise trichterähnlich.

Vorteilhaft sind Ausführungsformen der Brennkraftmaschine, bei denen das mindestens eine Heizelement von einem Flansch aufgenommen wird. Diese Ausführungsform gestattet es, die Heizvorrichtung als vormontierte Baugruppe bereitzustellen und Heizvorrichtungen gleicher Bauart in unterschiedlichen Brennkraftmaschinen einzusetzen. Dies erhöht die Stückzahl und senkt damit die Stückkosten. Zudem wird der Austausch einer defekten Heizvorrichtung erleichtert.

Vorteilhaft sind aber auch Ausführungsformen der Brennkraftmaschine, bei denen die Gesamtansaugleitung das mindestens eine Heizelement aufnimmt, d. h. den Flansch als Aufnahme ersetzt.

Vorteilhaft sind Ausführungsformen der Brennkraftmaschine, bei denen ein Ladeluftkühler vorgesehen ist, der mit einer Bypaßleitung ausgestattet ist, die stromaufwärts der Heizvorrichtung in die Gesamtansaugleitung mündet.

Der Ladeluftkühler senkt die Lufttemperatur und steigert damit die Dichte der Luft, wodurch auch der Kühler zu einer besseren Füllung der Zylinder mit Luft, d. h. zu einer größeren Luftmasse beiträgt. Die Ausstattung des Ladeluftkühlers mit einer Bypaßleitung zwecks Umgehung des Kühlers erweist sich insbesondere nach einem Kaltstart der Brennkraftmaschine bzw. während der Warmlaufphase als vorteilhaft. Eine Kühlung der angesaugten Luft in diesen Betriebszuständen würde dem Erwärmen in der Heizvorrichtung entgegen stehen, d. h. zuwiderlaufen.

Vorteilhaft sind Ausführungsformen der Brennkraftmaschine, bei denen eine externe Abgasrückführung vorgesehen ist, die mit einer Rückführleitung ausgestattet ist, die stromaufwärts der Heizvorrichtung in die Gesamtansaugleitung mündet.

Die Rückführung von Verbrennungsgasen von der Abgasseite in den Ansaugbereich wird als zielführend angesehen, um zukünftige Grenzwerte für Stickoxidemissionen einzuhalten, wobei hohe Abgasrückführraten, die in der Größenordnung von x_{AGR} ≈ 60% bis 70% liegen können, erforderlich sind, um eine deutliche Senkung der Stickoxidemissionen zu erreichen.

Die Rückführrate x_{AGR} bestimmt sich dabei zu x_{AGR}=m_{AGR}/(m_{AGR}+m_{Frischluft}), wobei m_{AGR} die Masse an zurückgeführtem Abgas und m_{Frischluft} die zugeführte Frischluft bezeichnet.

In der Abgasrückführleitung ist häufig eine Kühlvorrichtung vorgesehen, mit der die Temperatur im heißen Abgasstrom gesenkt wird, wodurch die Dichte der Abgase erhöht wird. Die Temperatur der Verbrennungsluft, die sich bei der Mischung der Frischluft mit den rückgeführten Abgasen einstellt, wird hierdurch ebenfalls gesenkt, weshalb auch die Kühlvorrichtung der Abgasrückführung zu einer besseren Füllung der Zylinder beiträgt. In der Regel wird eine Flüssigkeitskühlung verwendet. Gegebenenfalls ist es vorteilhaft, diese Kühlvorrichtung - wie den Ladeluftkühler - mit einer Bypaßleitung auszustatten.

In die Gesamtansaugleitung eingeleitete Gasströme erzeugen Turbulenzen. Mündet die Bypaßleitung eines Ladeluftkühlers und/oder die Rückführleitung einer Abgasrückführung stromaufwärts der Heizvorrichtung in die Gesamtansaugleitung, sorgt die stromabwärts angeordnete Heizvorrichtung auch für eine Beruhigung der Verbrennungsluftströmung.

Vorteilhaft sind Ausführungsformen der Brennkraftmaschine, bei denen eine Aufladung vorgesehen ist.

Die Aufladung dient in erster Linie der Leistungssteigerung der Brennkraftmaschine. Die Aufladung ist aber auch ein geeignetes Mittel, bei gleicher Leistung den Hubraum zu reduzieren, wodurch sich - bei gleichen Fahrzeugrandbedingungen - das Lastkollektiv zu höheren Lasten hin verschieben läßt, wo der spezifische Kraftstoffverbrauch niedriger ist.

Die zweite der Erfindung zugrunde liegende Teilaufgabe, nämlich ein Verfahren zum Betreiben einer Brennkraftmaschine einer zuvor beschriebenen Art aufzuzeigen, wird gelöst durch ein Verfahren, das dadurch gekennzeichnet ist, dass
- die Heizvorrichtung zur Erwärmung der Verbrennungsluft aktiviert wird, wenn die Kraftstoffzufuhr der Brennkraftmaschine deaktiviert ist.

Das bereits für die erfindungsgemäße Brennkraftmaschine Gesagte gilt auch für das erfindungsgemäße Verfahren, weshalb auf die entsprechenden Ausführungen Bezug genommen wird.

Wird die Kraftstoffzufuhr deaktiviert, fehlt die bei der Verbrennung durch die exotherme, chemische Umwandlung des Kraftstoffes freigesetzte Wärme, um die Brennkraftmaschine auf Betriebstemperatur zu halten.

Daher ist es vorteilhaft, die Heizvorrichtung zur Erwärmung der Verbrennungsluft zu aktivieren, wenn die Kraftstoffzufuhr der Brennkraftmaschine deaktiviert wird.

Vorteilhaft sind dabei Ausführungsformen des Verfahrens, bei denen die Heizvorrichtung zur Erwärmung der Verbrennungsluft aktiviert wird, wenn die Kraftstoffzufuhr der Brennkraftmaschine für eine vorgebbare Zeitspanne *Δt₁* deaktiviert ist.

Die Einführung einer zusätzlichen Bedingung für das Aktivieren der Heizvorrichtung soll ein zu häufiges An- und Abschalten der Heizvorrichtung verhindern, insbesondere ein Aktivieren der Heizvorrichtung, wenn die Kraftstoffzufuhr nur kurzzeitig deaktiviert wird, ohne dass ein Erwärmen der Ansaugluft mittels Heizvorrichtung erforderlich wäre.

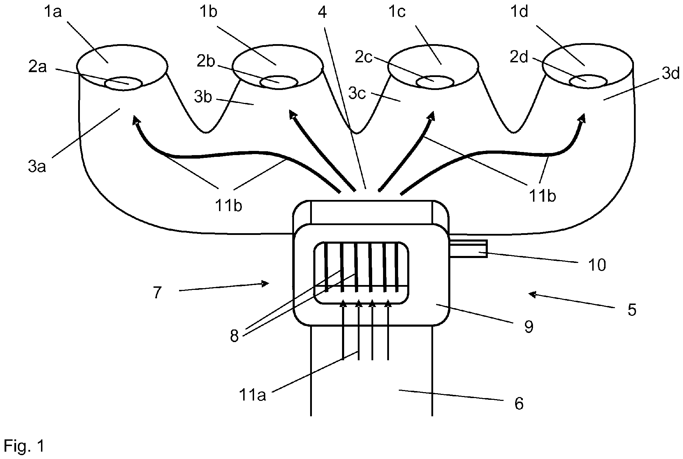

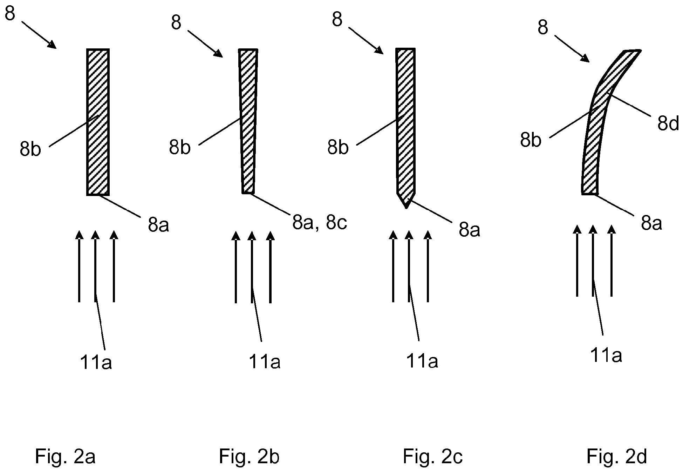

Im Folgenden wird die Erfindung anhand eines Ausführungsbeispiels gemäß den Figuren 1, 2a, 2b, 2c und 2d näher beschrieben. Hierbei zeigt:
- Fig.1: schematisch eine erste Ausführungsform des Einlaßbereiches einer Brennkraftmaschine in einer schräg angestellten Draufsicht, und
- Fig.2a: schematisch eine erste Ausführungsform eines bandförmigen Heizelementes im Querschnitt, und
- Fig.2b: schematisch eine zweite Ausführungsform eines bandförmigen Heizelementes im Querschnitt, und
- Fig.2c: schematisch eine dritte Ausführungsform eines bandförmigen Heizelementes im Querschnitt, und
- Fig.2d: schematisch eine vierte Ausführungsform eines bandförmigen Heizelementes im Querschnitt.

Figur 1 zeigt schematisch eine erste Ausführungsform des Einlaßbereiches 5 einer Brennkraftmaschine in einer schräg angestellten Draufsicht. Die Brennkraftmaschine umfaßt vier Zylinder 1a, 1b, 1c, 1d, die entlang der Längsachse des Zylinderkopfes in Reihe angeordnet sind.

Die Zylinder 1a, 1b, 1c, 1d der Brennkraftmaschine werden via Gesamtansaugleitung 6 mit Frischluft bzw. Verbrennungsluft 11a versorgt. In der Gesamtansaugleitung 6 ist eine Heizvorrichtung 7 zur Erwärmung der Verbrennungsluft 11a angeordnet.

Stromabwärts der Heizvorrichtung 7 geht die Gesamtansaugleitung 6 unter Ausbildung eines Verteilerknotenpunktes 4 in mehrere Ansaugleitungen 3a, 3b, 3c, 3d über, die zu den Einlaßöffnungen 2a, 2b, 2c, 2d der einzelnen Zylinder 1a, 1b, 1c, 1d führen.

Die Heizvorrichtung 7 weist eine Vielzahl von bandförmigen Heizelementen 8 auf, die im Wesentlichen vertikal zu einer Parallelen der Längsachse des Zylinderkopfes ausgerichtet sind, d. h. verlaufen, und mit einer ersten schmalen Seite ihres Querschnitts der angesaugten Verbrennungsluftströmung 11a zugewandt sind. Die Heizelemente 8 werden von einem Flansch 9 aufgenommen und sind elektrisch beheizbar. Ein elektrischer Anschluß 10 ist vorgesehen.

Die via Gesamtansaugleitung 6 angesaugte Verbrennungsluft 11a wird beim Durchströmen der aktivierten Heizvorrichtung 7 erwärmt. Die erwärmte Verbrennungsluft 11b wird anschließend, d. h. stromabwärts der Heizvorrichtung 7, am Verteilerknotenpunkt 4 auf die einzelnen Zylinder 1a, 1b, 1c, 1d verteilt.

Die in Figur 1 dargestellte Ausführungsform eines Einlaßbereichs 5 ist dadurch gekennzeichnet, dass die Heizvorrichtung 7 benachbart zu dem Verteilerknotenpunkt 4 angeordnet ist, wobei der Abstand Δ zwischen der Heizvorrichtung 7 und dem Verteilerknotenpunkt 4 kleiner ist als der Durchmesser *d* eines Zylinders 1a, 1b, 1c, 1d.

Figur 2a zeigt schematisch eine erste Ausuhrungsform des bandförmigen Heizelementes 8 im Querschnitt. Das Heizelement 8 weist einen in der Grundform rechteckigen Querschnitt 8b auf und ist mit einer ersten schmalen Seite 8a des Querschnitts 8b der angesaugten Verbrennungsluftströmung 11a zugewandt. Figur 2b zeigt schematisch eine zweite Ausführungsform des bandförmigen Heizelementes 8 im Querschnitt. Es sollen nur die Unterschiede zu der in Figur 2a dargestellten Ausführungsform erörtert werden, weshalb im Übrigen Bezug genommen wird auf Figur 2a. Für dieselben Bauteile wurden dieselben Bezugszeichen verwendet.

Im Unterschied zu der in Figur 2a dargestellten Ausführungsform verjüngt sich der Querschnitts 8b zu der ersten schmalen Seite 8a hin und damit das bandförmige Heizelement 8 hin zu einer ersten schmalen Stirnseite 8c, die der angesaugten Verbrennungsluftströmung 11a zugewandt ist.

Figur 2c zeigt schematisch eine dritte Ausführungsform des bandförmigen Heizelementes 8 im Querschnitt. Es sollen nur die Unterschiede zu der in Figur 2a dargestellten Ausführungsform erörtert werden, weshalb im Übrigen Bezug genommen wird auf Figur 2a. Für dieselben Bauteile wurden dieselben Bezugszeichen verwendet.

Im Unterschied zu der in Figur 2a dargestellten Ausführungsform verjüngt sich die erste schmale Seite 8a des Querschnitts 8b und damit die erste schmale Stirnseite 8c des Heizelementes 8 hin zur angesaugten Verbrennungsluftströmung 11a, d. h. entgegen der Strömungsrichtung.

Figur 2d zeigt schematisch eine vierte Ausführungsform des bandförmigen Heizelementes 8 im Querschnitt. Es sollen nur die Unterschiede zu der in Figur 2a dargestellten Ausführungsform erörtert werden, weshalb im Übrigen Bezug genommen wird auf Figur 2a. Für dieselben Bauteile wurden dieselben Bezugszeichen verwendet.

Im Unterschied zu der in Figur 2a dargestellten Ausführungsform weist das bandförmige Heizelement 8 eine schaufelförmige Gestalt auf mit einer konkaven Seite 8d und einer konvexen Seite.

### Bezugszeichen

- 1a: Zylinder
- 1b: Zylinder
- 1c: Zylinder
- 1d: Zylinder
- 2a: Einlaßöffnung
- 2b: Einlaßöffnung
- 2c: Einlaßöffnung
- 2d: Einlaßöffnung
- 3a: Ansaugleitung
- 3b: Ansaugleitung
- 3c: Ansaugleitung
- 3d: Ansaugleitung
- 4: Verteilerknotenpunkt
- 5: Einlaßbereich, Ansaugbereich
- 6: Gesamtansaugleitung
- 7: Heizvorrichtung
- 8: Heizelemente
- 8a: erste schmale Seite des Querschnitts
- 8b: Querschnitt eines Heizelementes
- 8c: erste schmale Stirnseite eines Heizelementes
- 8d: konkave Seite eines schaufelförmigen Heizelementes
- 9: Flansch
- 10: elektrischer Anschluß
- 11a: angesaugte Verbrennungsluft
- 11b: erwärmte Verbrennungsluft

- Δ: Abstand zwischen der Heizvorrichtung und dem Verteilerknotenpunkt
- *d*: Durchmesser eines Zylinders
- m_{AGR}: Masse an zurückgeführtem Abgas
- m_{Frischluft}: Frischluftmasse
- x_{AGR}: Abgasrückführrate

## Patentansprüche

1. Brennkraftmaschine mit mindestens einem Zylinderkopf und mindestens zwei Zylindern (1a, 1b, 1c, 1d), bei der jeder Zylinder (1a, 1b, 1c, 1d) mindestens eine Einlaßöffnung (2a, 2b, 2c, 2d) zum Zuführen von Verbrennungsluft (11a, 11b) in den Zylinder (1a, 1b, 1c, 1d) aufweist, wobei
- zu jeder Einlaßöffnung (2a, 2b, 2c, 2d) eine Ansaugleitung (3a, 3b, 3c, 3d) führt,
- die Ansaugleitungen (3a, 3b, 3c, 3d) von mindestens zwei Zylindern (1a, 1b, 1c, 1d) unter Ausbildung eines Verteilerknotenpunktes (4) zu einer Gesamtansaugleitung (6) zusammenführen, und
- in der Gesamtansaugleitung (6) eine Heizvorrichtung (7) angeordnet ist, die mindestens ein bandförmiges Heizelement (8) aufweist, welches mit einer ersten schmalen Seite (8a) des Querschnitts (8b) der angesaugten Verbrennungsluftströmung (11a) zugewandt ist,
**dadurch gekennzeichnet, dass**
- die Heizvorrichtung (7) benachbart zu dem Verteilerknotenpunkt (4) angeordnet ist, in dem die Ansaugleitungen (3a, 3b, 3c, 3d) zu der Gesamtansaugleitung (6) zusammenführen, wobei der Abstand Δ zwischen der Heizvorrichtung (7) und dem Verteilerknotenpunkt (4) kleiner ist als der Durchmesser *d* eines Zylinders (1a, 1b, 1c, 1d) mit Δ < *d*, und
- eine externe Abgasrückführung vorgesehen ist, die mit einer Rückführleitung ausgestattet ist, die stromaufwärts der Heizvorrichtung (7) in die Gesamtansaugleitung (6) mündet.

2. Brennkraftmaschine nach Anspruch 1, **dadurch gekennzeichnet, dass** der Abstand Δ zwischen der Heizvorrichtung (7) und dem Verteilerknotenpunkt (4) kleiner ist als der halbe Durchmesser d eines Zylinders (1a, 1b, 1c, 1d) mit Δ < 0.5*d.*

3. Brennkraftmaschine nach Anspruch 1 oder 2, **dadurch gekennzeichnet, dass** der Abstand Δ zwischen der Heizvorrichtung (7) und dem Verteilerknotenpunkt (4) kleiner ist als ein Viertel des Durchmesser d eines Zylinders (1a, 1b, 1c, 1d) mit Δ < 0.25*d*.

4. Brennkraftmaschine nach einem der vorherigen Ansprüche, bei der die mindestens zwei Zylinder (1a, 1b, 1c, 1d) entlang der Längsachse des mindestens einen Zylinderkopfes in Reihe angeordnet sind, **dadurch gekennzeichnet, dass** das mindestens eine bandförmige Heizelement (8) im Wesentlichen horizontal entlang einer Parallelen zur Längsachse des mindestens einen Zylinderkopfes ausgerichtet ist.

5. Brennkraftmaschine nach einem der Ansprüche 1 bis 3, bei der die mindestens zwei Zylinder (1a, 1b, 1c, 1d) entlang der Längsachse des mindestens einen Zylinderkopfes in Reihe angeordnet sind, **dadurch gekennzeichnet, dass** das mindestens eine bandförmige Heizelement (8) im Wesentlichen vertikal quer zu einer Parallelen der Längsachse des mindestens einen Zylinderkopfes ausgerichtet ist.

6. Brennkraftmaschine nach einem der vorherigen Ansprüche, **dadurch gekennzeichnet, dass** sich das mindestens eine bandförmige Heizelement (8) zu einer ersten schmalen Stirnseite (8c) hin, die der angesaugten Verbrennungsluftströmung (11a, 11b) zugewandt ist, verjüngt.

7. Brennkraftmaschine nach einem der vorherigen Ansprüche, **dadurch gekennzeichnet, dass** sich eine erste schmale Stirnseite (8c) des mindestens einen bandförmigen Heizelementes (8), die der angesaugten Verbrennungsluftströmung (11a, 11b) zugewandt ist, verjüngt.

8. Brennkraftmaschine nach einem der vorherigen Ansprüche, **dadurch gekennzeichnet, dass** der Querschnitt (8b) des mindestens einen bandförmigen Heizelements (8) bogenförmig ausgebildet ist, so dass das mindestens eine bandförmige Heizelement (8) eine schaufelförmige Gestalt aufweist.

9. Brennkraftmaschine nach einem der vorherigen Ansprüche, **dadurch gekennzeichnet, dass** die Heizvorrichtung (7) mindestens zwei bandförmige Heizelemente (8) aufweist.

10. Brennkraftmaschine nach Anspruch 9, **dadurch gekennzeichnet, dass** die mindestens zwei bandförmigen Heizelemente (8) beabstandet zueinander angeordnet sind.

11. Brennkraftmaschine nach Anspruch 9 oder 10, bei der die mindestens zwei bandförmigen Heizelemente (8) im Wesentlichen vertikal quer zu einer Parallelen der Längsachse des mindestens einen Zylinderkopfes ausgerichtet sind, **dadurch gekennzeichnet, dass** mindestens zwei bandförmige Heizelemente (8) in einem spitzen Winkel zueinander angestellt sind.

12. Brennkraftmaschine nach einem der Ansprüche 9 bis 11, bei der die mindestens zwei bandförmigen Heizelemente (8) im Wesentlichen vertikal quer zu einer Parallelen der Längsachse des mindestens einen Zylinderkopfes ausgerichtet sind, **dadurch gekennzeichnet, dass** mindestens zwei bandförmige Heizelemente (8) eine schaufelförmige Gestalt aufweisen, wobei die konkave Seite (8d) nach außen gewandt ist.

13. Brennkraftmaschine nach einem der vorherigen Ansprüche, **dadurch gekennzeichnet, dass** ein Ladeluftkühler vorgesehen ist, der mit einer Bypaßleitung ausgestattet ist, die stromaufwärts der Heizvorrichtung (7) in die Gesamtansaugleitung (6) mündet.

14. Verfahren zum Betreiben einer Brennkraftmaschine nach einem der vorherigen Ansprüche, **dadurch gekennzeichnet, dass** die Heizvorrichtung (7) zur Erwärmung der Verbrennungsluft (11a, 11b) aktiviert wird, wenn die Kraftstoffzufuhr der Brennkraftmaschine deaktiviert ist.

## Claims

1. Internal combustion engine having at least one cylinder head and at least two cylinders (1a, 1b, 1c, 1d), in which each cylinder (1a, 1b, 1c, 1d) has at least one inlet opening (2a, 2b, 2c, 2d) for the supply of combustion air (11a, 11b) into the cylinder (1a, 1b, 1c, 1d), in which internal combustion engine
- an intake line (3a, 3b, 3c, 3d) leads to each inlet opening (2a, 2b, 2c, 2d),
- the intake lines (3a, 3b, 3c, 3d) of at least two cylinders (1a, 1b, 1c, 1d) merge to form an overall intake line (6), such that a distributor junction point (4) is formed, and
- there is arranged in the overall intake line (6) a heating device (7) which has at least one strip-like heating element (8), a first narrow side (8a) of the cross section (8b) of which faces toward the intake combustion air flow (11a),
**characterized in that**
- the heating device (7) is arranged adjacent to the distributor junction point (4) at which the intake lines (3a, 3b, 3c, 3d) merge to form the overall intake line (6), the spacing *Δ* between the heating device (7) and the distributor junction point (4) being smaller than the diameter *d* of a cylinder (1a, 1b, 1c, 1d), *Δ* < *d*, and
- an external exhaust-gas recirculation system is provided which is equipped with a recirculation line which opens into the overall intake line (6) upstream of the heating device (7).

2. Internal combustion engine according to Claim 1, **characterized in that** the spacing *Δ* between the heating device (7) and the distributor junction point (4) is smaller than one half of the diameter *d* of a cylinder (1a, 1b, 1c, 1d), *Δ* < 0.5*d*.

3. Internal combustion engine according to Claim 1 or 2, **characterized in that** the spacing *Δ* between the heating device (7) and the distributor junction point (4) is smaller than one quarter of the diameter *d* of a cylinder (1a, 1b, 1c, 1d), *Δ* < 0.25*d*.

4. Internal combustion engine according to one of the preceding claims, in which the at least two cylinders (1a, 1b, 1c, 1d) are arranged in series along the longitudinal axis of the at least one cylinder head, **characterized in that** the at least one strip-like heating element (8) is aligned substantially horizontally along a line parallel to the longitudinal axis of the at least one cylinder head.

5. Internal combustion engine according to one of Claims 1 to 3, in which the at least two cylinders (1a, 1b, 1c, 1d) are arranged in series along the longitudinal axis of the at least one cylinder head, **characterized in that** the at least one strip-like heating element (8) is aligned substantially vertically, perpendicular to a line parallel to the longitudinal axis of the at least one cylinder head.

6. Internal combustion engine according to one of the preceding claims, **characterized in that** the at least one strip-like heating element (8) tapers toward a first narrow end side (8c) which faces toward the intake combustion air flow (11a, 11b).

7. Internal combustion engine according to one of the preceding claims, **characterized in that** a first narrow end side (8c), which faces toward the intake combustion air flow (11a, 11b), of the at least one strip-like heating element (8) tapers.

8. Internal combustion engine according to one of the preceding claims, **characterized in that** the cross section (8b) of the at least one strip-like heating element (8) is of arc-shaped design, such that the at least one strip-like heating element (8) has a blade-like form.

9. Internal combustion engine according to one of the preceding claims, **characterized in that** the heating device (7) has at least two strip-like heating elements (8).

10. Internal combustion engine according to Claim 9, **characterized in that** the at least two strip-like heating elements (8) are arranged spaced apart from one another.

11. Internal combustion engine according to Claim 9 or 10, in which the at least two strip-like heating elements (8) are aligned substantially vertically, perpendicular to a line parallel to the longitudinal axis of the at least one cylinder head, **characterized in that** at least two strip-like heating elements (8) are set at an acute angle with respect to one another.

12. Internal combustion engine according to one of Claims 9 to 11, in which the at least two strip-like heating elements (8) are aligned substantially vertically, perpendicular to a line parallel to the longitudinal axis of the at least one cylinder head, **characterized in that** at least two strip-like heating elements (8) have a blade-like form, wherein the concave side (8d) faces outward.

13. Internal combustion engine according to one of the preceding claims, **characterized in that** a charge-air cooler is provided which is equipped with a bypass line which opens into the overall intake line (6) upstream of the heating device (7).

14. Method for operating an internal combustion engine according to one of the preceding claims, **characterized in that** the heating device (7) is activated so as to heat the combustion air (11a, 11b) when the fuel supply of the internal combustion engine is deactivated.

## Revendications

1. Moteur à combustion interne comprenant au moins une culasse et au moins deux cylindres (1a, 1b, 1c, 1d), dans lequel chaque cylindre (1a, 1b, 1c, 1d) présente au moins une ouverture d'entrée (2a, 2b, 2c, 2d) pour l'alimentation d'air comburant (11a, 11b) dans le cylindre (1a, 1b, 1c, 1d),
- une conduite d'admission (3a, 3b, 3c, 3d) conduisant à chaque ouverture d'entrée (2a, 2b, 2c, 2d),
- les conduites d'admission (3a, 3b ,3c, 3d) d'au moins deux cylindres (1a, 1b, 1c, 1d) se réunissant en formant un noeud de distribution (4) en une conduite d'admission commune (6), et
- un dispositif de chauffage (7) étant disposé dans la conduite d'admission commune (6), lequel dispositif présente au moins un élément chauffant (8) en forme de bande qui est tourné avec un premier côté étroit (8a) de la section transversale (8b) vers l'écoulement d'air comburant admis (11a),
**caractérisé en ce que**
- le dispositif de chauffage (7)
est disposé à proximité du noeud de distribution (4), dans lequel les conduites d'admission (3a, 3b, 3c, 3d) se réunissent en la conduite d'admission commune (6), la distance Δ entre le dispositif de chauffage (7) et le noeud de distribution (4) étant inférieure au diamètre d d'un cylindre (1a, 1b, 1c, 1d) avec Δ < d, et
- il est prévu une recirculation de gaz d'échappement qui est munie d'une conduite de recirculation qui débouche en amont du dispositif de chauffage (7) dans la conduite d'admission commune (6).

2. Moteur à combustion interne selon la revendication 1, **caractérisé en ce que** la distance Δ entre le dispositif de chauffage (7) et le noeud de distribution (4) est inférieure au demi- diamètre d d'un cylindre (1a, 1b, 1c, 1d) avec Δ < 0, 5*d*.

3. Moteur à combustion interne selon la revendication 1 ou 2, **caractérisé en ce que** la distance Δ entre le dispositif de chauffage (7) et le noeud de distribution (4) est inférieure à un quart du diamètre d d'un cylindre (1a, 1b, 1c, 1d) avec Δ < 0, 25*d*.

4. Moteur à combustion interne selon l'une quelconque des revendications précédentes, dans lequel les au moins deux cylindres (1a, 1b, 1c, 1d) sont disposés en série le long de l'axe longitudinal de l'au moins une culasse, **caractérisé en ce que** l'au moins un élément chauffant (8) en forme de bande est orienté essentiellement horizontalement le long d'une parallèle à l'axe longitudinal de l'au moins une culasse.

5. Moteur à combustion interne selon l'une quelconque revendications 1 à 3, dans lequel les au moins deux cylindres (1a, 1b, 1c, 1d) sont disposés en série le long de l'axe longitudinal de l'au moins une culasse, **caractérisé en ce que** l'au moins un élément chauffant (8) en forme de bande est orienté essentiellement verticalement transversalement à une parallèle à l'axe longitudinal de l'au moins une culasse.

6. Moteur à combustion interne selon l'une quelconque des revendications précédentes, **caractérisé en ce que** l'au moins un élément chauffant (8) en forme de bande se rétrécit en direction d'un premier côté frontal étroit (8c), qui est tourné vers l'écoulement d'air comburant admis (11a, 11b).

7. Moteur à combustion interne selon l'une quelconque des revendications précédentes, **caractérisé en ce qu'**un premier côté frontal étroit (8c) de l'au moins un élément chauffant (8) en forme de bande qui est tourné vers l'écoulement d'air comburant admis (11a, 11b) se rétrécit.

8. Moteur à combustion interne selon l'une quelconque des revendications précédentes, **caractérisé en ce que** la section transversale (8b) de l'au moins un élément chauffant (8) en forme de bande est réalisée sous forme courbe, de telle sorte que l'au moins un élément chauffant (8) en forme de bande présente une configuration en forme de pale.

9. Moteur à combustion interne selon l'une quelconque des revendications précédentes, **caractérisé en ce que** le dispositif de chauffage (7) présente au moins deux éléments chauffants (8) en forme de bande.

10. Monteur à combustion interne selon la revendication 9, **caractérisé en ce que** les au moins deux éléments chauffants (8) en forme de bande sont disposés à distance l'un de l'autre.

11. Moteur à combustion interne selon la revendication 9 ou 10, dans lequel les au moins deux éléments chauffants (8) en forme de bande sont orientés essentiellement verticalement transversalement à une parallèle à l'axe longitudinal de l'au moins une culasse, **caractérisé en ce qu'**au moins deux éléments chauffants (8) en forme de bande sont inclinés l'un par rapport à l'autre suivant un angle aigu.

12. Moteur à combustion interne selon l'une quelconque des revendications 9 à 11, dans lequel les au moins deux éléments chauffants (8) en forme de bande sont orientés essentiellement verticalement transversalement à une parallèle à l'axe longitudinal de l'au moins une culasse, **caractérisé en ce qu'**au moins deux éléments chauffants (8) en forme de bande présentent une configuration en forme de pale, le côté concave (8d) étant tourné vers l'extérieur.

13. Moteur à combustion interne selon l'une quelconque des revendications précédentes, **caractérisé en ce qu'**il est prévu un refroidisseur d'air de suralimentation qui est muni d'une conduite de dérivation qui débouche en amont du dispositif de chauffage (7) dans la conduite d'admission commune (6).

14. Procédé pour faire fonctionner un moteur à combustion interne selon l'une quelconque des revendications précédentes, **caractérisé en ce que** le dispostif de chauffage (7) est activé pour réchauffer l'air comburant (11a, 11b) lorsque l'alimentation en carburant du moteur à combustion interne est désactivée.
